# EUROPEAN PATENT SPECIFICATION

(11) **EP 1 883 242 B1**
(45) Date of publication and mention of the grant of the patent: **17.09.2014**
(21) Application number: 06746632.6
(22) Date of filing: 18.05.2006
(51) Int. Cl.: G06K 9/00, H04N 5/235, G06K 9/20

(54) **IMAGE PROCESSOR FOR VEHICLES**
BILDPROZESSOR FÜR FAHRZEUGE
PROCESSEUR D'IMAGES POUR VEHICULES

(30) Priority: 20.05.2005 JP 2005148097; 11.05.2006 JP 2006132205
(43) Date of publication of application: 30.01.2008
(60) Divisional application: 09009938.3
(73) Proprietor: TOYOTA JIDOSHA KABUSHIKI KAISHA, Toyota-shi, Aichi-ken, 471-8571 (JP)
(72) Inventor: USAMI, Masayuki c/o TOYOTA JIDOSHA KABUSHIKI KAISHA, Toyota-shi Aichi 471-8571 (JP); TAMAOKI, Tomoyasu c/o TOYOTA TECHNICAL DEVELOPMENT CORPORATION, Toyota-shi Aichi 470-0334 (JP)
(74) Representative: Winter, Brandl, Fürniss, Hübner, Röss, Kaiser, Polte - Partnerschaft mbB
(86) International application number: PCT/JP2006/309965
(87) International publication number: WO 2006/123754

(56) References cited:
- EP-A2- 1 513 103
- WO-A1-2005/006756
- JP-A- H08 240 833
- JP-A- 2001 043 496
- JP-A- 2004 032 793
- US-A1- 2004 066 458
- GRAEFE V: "ECHTZEIT-BILDVERARBEITUNG FUR EIN FAHRER-UNTERSTUTZUNGSSYSTEM ZUM ENSATZ AUF AUTOBAHNEN" IT + TI INFORMATIONSTECHNIK UND TECHNISCHE INFORMATIK, OLDENBOURG VERLAG. MUNCHEN, DE, vol. 36, no. 1, 1 February 1994 (1994-02-01), pages 16-24, XP000435494 ISSN: 0944-2774
- YAMADA K ET AL: "Effectiveness of video camera dynamic range expansion for lane mark detection" INTELLIGENT TRANSPORTATION SYSTEM, 1997. ITSC '97., IEEE CONFERENCE ON BOSTON, MA, USA 9-12 NOV. 1997, NEW YORK, NY, USA,IEEE, US, 9 November 1997 (1997-11-09), pages 584-588, XP010270840 ISBN: 978-0-7803-4269-9

## Description

### TECHNICAL FIELD

The present invention relates to an image processing apparatus for vehicle, that detects white lines and three-dimensional objects on a road surface based on a captured image.

### BACKGROUND ART

Conventionally, there is a known control apparatus (for example, refer to Patent Document 1) for controlling a shutter speed of a camera using a luminance histogram which is created based on a luminance distribution of an image that is captured by the camera. The control apparatus described in the Patent Document 1 adds the values of the luminance distribution histogram from the low luminance side to obtain one accumulated value and from the high luminance side to obtain another accumulated value until respective set values are exceeded, and adjusts the shutter speed so that an interval on the low luminance side when the one accumulated value exceeds the corresponding set value and an interval on the high luminance side when the other accumulated value exceeds the corresponding set value become the same.

In vehicles, the camera having its shutter speed controlled in this manner captures a periphery of the vehicle and supports a driver based on the captured image. There is a known image processing apparatus for vehicle (for example, refer to Patent Document 2) which supports the vehicle operation by detecting the traffic lane, obstacles and the like from the captured image of the periphery of the vehicle, for example. The image processing apparatus for vehicle described in the Patent Document 2 detects the white line from the image obtained by one of a pair of stereo cameras, and detects the three-dimensional object from a correlation that is obtained by comparing images obtained by the two cameras in units of rectangular regions.
Patent Document 1: Japanese Laid-Open Patent Application No.11-258654
Patent Document 2: Japanese Laid-Open Patent Application No.11-14346

Graefe, V.: "Echtzeit-Bildverarbeitung fur ein Fahrer-Unterstützungssystem zum Einsatz auf Autobahnen", IT + TI Informationstechnik und Technische Informatik, Oldenbourg Verlag, München, vol. 36, no.1, 1 February 1994, pages 16 - 24, discloses a real time image processing method for a driver support system to be used on freeways. There are implemented a plurality of visual object recognition modules by object oriented programming. The system is able to detect or recognize road lines as well as different types of three-dimensional objects such as road signs. The system uses three cameras, i.e. a first camera for the front direction having a wide angle lens, a camera for the front direction having a telephoto lens, and a camera for rear direction. Moreover, it is mentioned to use a commonly used camera which is modified such that the integration time of its sensor elements can be digitally controlled. By this, the exposure conditions of the camera can be controlled such that at least image regions containing essential information are properly exposed, whereas upper image regions, which at that point of time are irrelevant, are allowed to be underexposed or overexposed.

WO2005006756, which discloses the features of the preamble of claim 1, and EP1513103 A2 describe the shared usage of a camera for implementing multiple detection functions/applications, including taillight detection, headlight detection, white line detection and vehicle detection. The camera control parameters for the acquisition of appropriate frames are sequentially switched according to the function/application. JP08-240833 describes the calculation of camera control values used in independent systems for either white line detection or vehicle detection.

### DISCLOSURE OF THE INVENTION

### PROBLEMS TO BE SOLVED BY THE INVENTION

However; a suitable shutter speed differs between the case where the white line on the road surface is detected and the case where the three-dimensional object on the road surface is detected. For this reason, if the shutter speed is controlled based on the luminance distribution of the entire image that is captured without distinguishing the white line detection from the three-dimensional object detection as described in the Patent Document 1, it is not possible to capture an image that is suited for the detection of both the white line and the three-dimensional object. In addition, even if the pair of stereo cameras is simply used in common for both the white line detection and the three-dimensional object detection as described in the Patent Document 2, it is difficult to accurately detect the white line and the three-dimensional object.

Accordingly, one object of the present invention is to provide an image processing apparatus for vehicle, which can obtain images suited for both the three-dimensional object detection and the white line detection by using cameras in common for the two detections.

### MEANS OF SOLVING THE PROBLEMS

The object is solved by the features of independent claim 1. The dependent claims are directed to preferred embodiments of the invention.

### EFFECTS OF THE INVENTION

According to the present invention, it is possible to provide an image processing apparatus for vehicle, which can obtain images suited for both the three-dimensional object detection and the white line detection by using cameras in common for the two detections.

### BRIEF DESCRIPTION OF DRAWINGS

FIG. 1 is a diagram showing an example of a system structure using an image processing apparatus for vehicle according to the present invention;
FIG. 2 is a diagram showing a portion of an image processing sequence carried out between a camera ECU and a stereo ECU;
FIG. 3 is a flow chart of a three-dimensional object detection process;
FIG. 4 is a flow chart of a white line detection process;
FIG. 5 is a timer routine for transmitting camera control values at a constant period;
FIG. 6 is a flow chart for a case where the camera ECU carries out a camera control;
FIG. 7 is a diagram showing a state where a brightness reference window is set on a road surface; and
FIG. 8 is a diagram showing a state where a brightness reference window is set in a periphery of a three-dimensional object.

### DESCRIPTION OF THE REFERENCE NUMERALS

10 Camera ECU
11, 12 Image Pickup Element
13 Camera CPU
14 Image Output Part
15, 16 Lens
17 Camera Module
18, 25, 26 Memory
20 Stereo ECU
21 Image Input Part
22 Image Conversion Process Part
23 SV-CPU
24 Image Recognition Process Part

### BEST MODE FOR CARRYING OUT THE INVENTION

A description will now be given of the best mode for carrying out the present invention in conjunction with the drawings by referring to a preferred embodiment.

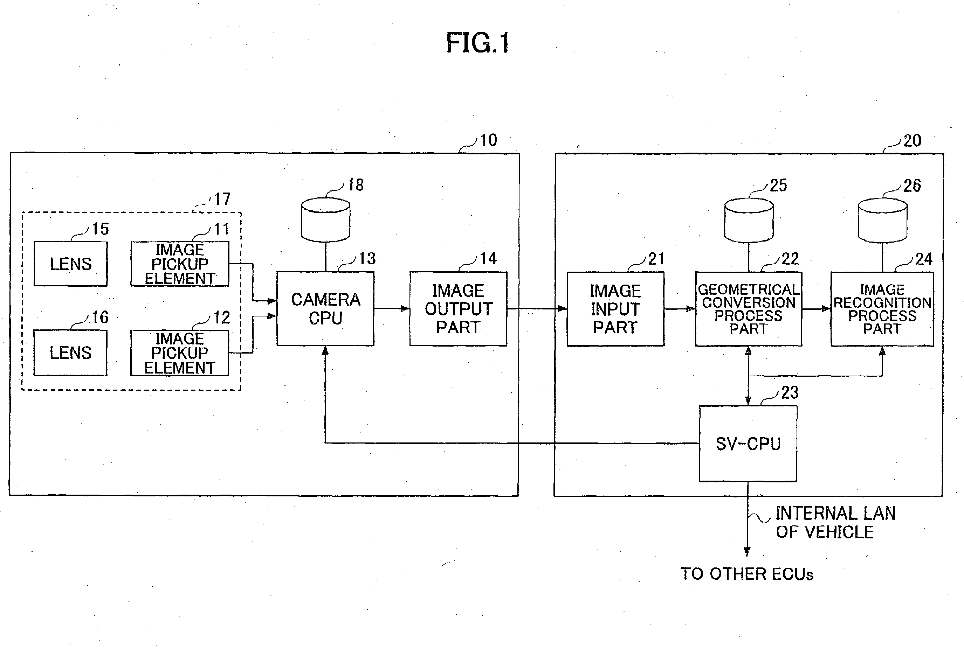

FIG. 1 is a diagram showing an example of a system structure using an image processing apparatus for vehicle according to the present invention. The image processing system has a camera Electric Control Unit (ECU) 10 and a stereo ECU 20. Each of the ECUs integrally has a plurality of circuit elements such as a Central Processing Unit (CPU), a ROM for storing programs, a RAM for temporarily storing data, an input interface and an output interface, as a single unit. The ECU is also referred to as a computer.

The camera ECU 10 has as an image pickup means, a camera module 17, a camera CPU 13, an image output part 14 and the like. The camera module 17 is formed by a stereo camera that is made up of image pickup elements 11 and 12, and lenses 15 and 16. For example, the image pickup elements 11 and 12 are formed by a photoelectric conversion element such as a Charged Coupled Device (CCD) and a Complementary Metal Oxide Semiconductor (CMOS). Light that is input to each of the camera module 17 from a front of the vehicle is subjected to a photoelectric conversion in the image pickup elements 11 and 12, and the accumulated charge is read as a voltage and amplified before being subjected to an analog-to-digital (A/D) conversion, and further converted into a digital image having a predetermined number of luminance gradation levels (for example, 256 gradation levels).

The camera CPU 13 carries out a camera control for adjusting a frame exposure on the camera side, based on camera control values which are obtained from the stereo ECU 20 and will be described later. The camera CPU 13 transmits, as an image signal, the frame captured by the camera module 17, the camera control values applied when capturing the image, a frame counter value and the like, to the stereo ECU 20 via the image output part 14 which forms an output interface. The number of image pickup elements is not limited to two, and mode than two image pickup elements may be provided.

The stereo ECU 20 has an image input part 21 which forms an input interface, a geometrical conversion process part 22 having a geometrical conversion LSI or the like, an image recognition process part 24 having an image processing LSI or the like, and an SV-CPU 23 which supervises each of the processing parts 22 and 24.

The image signal that is output from the image output part 14 of the camera ECU 10 is transmitted to the image input part 21 which forms the input interface of the stereo ECU 20. The image output part 14 and the image input part 21 are formed by interfaces in conformance with a predetermined digital transmission system.

The image input part 21 which receives the image signal transmits image data of the image signal to the geometrical conversion process part 22. The geometrical conversion process part 22 removes the effects of internal error factors (lens distortion, error in optical axis, error in focal distance, distortion in image pickup element, etc.) of hardware such as the image pickup elements 11 and 12, the lenses 15 and 16 and the like, from the frame that is captured by the camera module 17 and is used for a stereo operation process, so as to carry out a known process of matching an epipolar line to an image horizontal line. The geometrical conversion process part 22 converts the input image based on a Look Up Table (LUT) for geometrical conversion stored in a memory 25.

The image recognition process part 24 carries out a three-dimensicnal object detection process, a white line detection process and a shutter control based on the image data which has been subjected to the geometrical conversion and is obtained from the geometrical conversicn process part 22. Image processing programs for carrying out these processes and control and the image data to be processed are recorded in a memory 26, and the image recognition process part 24 carries out the processes and control by reading the recorded programs and data.

The three-dimensional object detection process that is executed by the image recognition process part 24 is a process of the image processing program which detects the three-dimensional object from the frame which is captured by the stereo vision technique, for example. For example, the three-dimensional object detection process obtains a correlation of a pair of images picked up by the image pickup elements 12 and 11 that are arranged on the right and left, and computes a distance to the object by triangulation based on parallax with respect to the same object.

In other words, the image recognition process part 24 extracts portions having the same capturing target object from a pair of stereo images picked up by the image pickup elements 11 and 12, obtains a correspondence between the same point on the capturing target object between the pair of stereo images, and obtains an amount of error (parallax) between the points (corresponding points) for which the correspondence is obtained so as to compute the distance to the capturing target object. In a case where the capturing target object is located in front, the captured target objects deviate to the right and left in the horizontal direction when the image picked up by the image pickup element 12 and the image picked up by the image pickup element 11 are overlapped. One of the two picked up images is shifted one pixel at a time until the two overlapped images matches the most, and the number of pixels shifted in this state is denoted by n. If the focal distance of the lens is denoted by f, the distance between the optical axis is denoted by m and the pixel pitch is denoted by d, a distance L to the capturing target object can be described by "L = (f·m)/(n·d)", where (n·d) indicates the parallax.

On the other hand, the white line detection process that is executed by the image recognition process part 24 is a process of the image processing program which detects the white line on the road surface from the frame which is captured. First, the white line detection process selects pixels (white line candidate points) that are regarded as corresponding to the white line on the road surface from the frame which is captured and binarized according to the luminance. Then, the white line detection process judges that the selected white line candidate points are the white line on the road surface if the white line candidate points are arranged linearly.

The white line detection process may also be carried out as follows. That is, based on the luminance of the frame that is captured, for example, regions having a luminance equal to or higher than a predetermined threshold value are searched from a bottom portion of the frame towards an upper portion of the frame. Since the white line has on both sides thereof an edge having a high-frequency component, a peak is obtained at both sides of the white line when the frame in front of the vehicle is differentiated in the horizontal direction. The white line portion can be estimated from the peaks because the positive and negative polarities of the peaks are opposite to each other between a case when moving from outside the white line to within the white line and a case when moving from inside the white line to outside the white line. The white line portion can be emphasized by subjecting the frame to a white line emphasis filter which carries out such a process. From the frame in which the white line is emphasized, it is possible to detect the white line by a technique such as matching which detects a region having features such as high luminance and linear shape that are features of the white line.

In addition, the shutter control executed by the image recognition process part 24 carries out a process of computing and adjusting appropriate camera control values (shutter speed S and control gain K). The frame exposure changes depending on the shutter speed S, and the image can be captured even at a dark location by setting the shutter speed S slow because the passing light will be kept. The image recognition process part 24 computes the appropriate camera control values based on a predetermined function F of a target brightness D_{R} in the captured frame and an actual brightness D_{A} of the captured frame. For example, if the present value of the shutter speed S is denoted by S_{N}, the previous value of the shutter speed S is denoted by S_{N-1}, and the control gain is denoted by K, the camera control value is computed based on the predetermined function F described by "S_{N} = S_{N-1} + K·(D_{R} - D_{A})",

The SV-CPU 23 supervises each of the processing parts, and it is possible for the image recognition process part 24 to function as the SV-CPU 23. The SV-CPU 23 transmits and instructs with respect to the CPU 13 within the camera ECU 10 the camera control values which are the result of the camera control.

By providing the camera ECU 10 and the stereo ECU 20 described above on the vehicle, it is possible to utilize the system for control that uses the image recognition information of the obstacles and the like on the road surface. For example, the SV-CPU 23 may transmit the result of the image recognition process to other ECUs that require the image recognition process result via an internal LAN of the vehicle. For example, the other ECUs include an ECU that controls a collision avoiding and/or collision reducing system, an ECU for controlling a traffic lane maintaining support system or a traffic lane deviance alert system, a vehicle following ECU, a brake ECU and the like.

Next, a description will be given of the operation of the image processing apparatus for the vehicle according to this embodiment, by referring to the drawings.

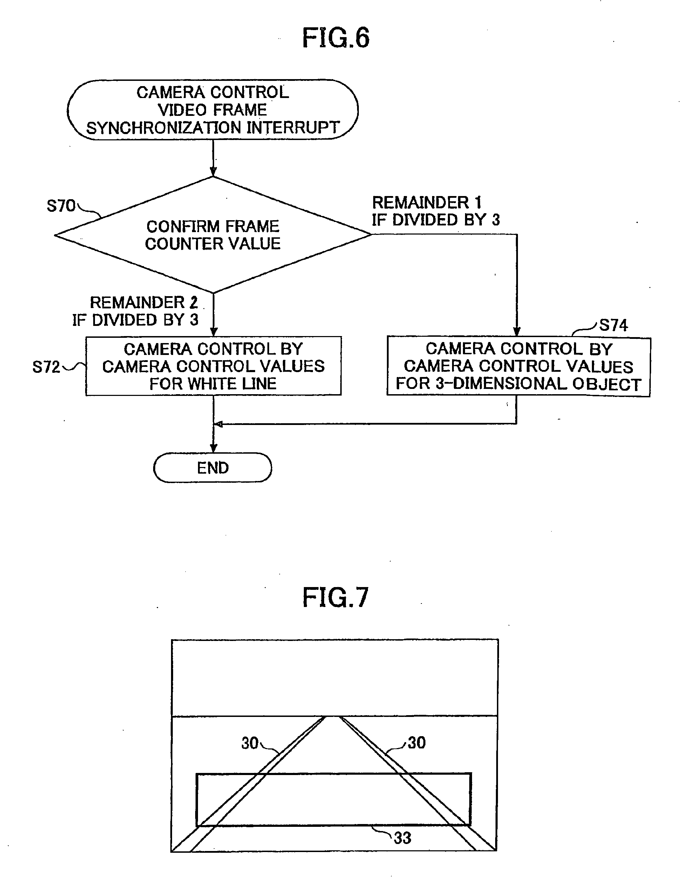

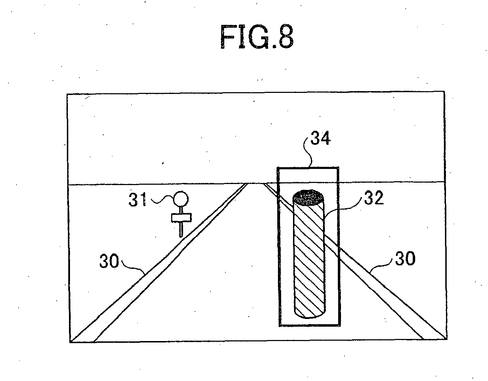

When detecting a target object by an image processing, it is desirable to control the exposure of the camera by adjusting the camera control values such as the shutter speed, so that the target object has an optimum brightness. One technique of controlling the target object sets on the captured image a window which becomes a reference for determining the camera control values. As shown in FIG. 7, in order to appropriately detect a white line 30 that is detected by the white line detection, a brightness reference window 33 is set on the road surface. On the other hand, as shown in FIG. 8, in order to appropriately detect a three-dimensional object 32, such as a leading vehicle and an obstacle, that is detected by the three-dimensional object detection process, a brightness reference window 34 is set in a periphery of the three-dimensional object 32. However, when carrying out both the white line detection and the three-dimensional object detection, it becomes important how the brightness reference is set.

In addition, when the camera control values for the white line are used when detecting the three-dimensional object, the picture may saturate, thereby making it impossible to gather the information of the three-dimensional object. Furthermore, even if the camera ECU 10 an simply switch between the picture for the white line appropriately applied with the camera control values for the white line and the picture for the three-dimensional object appropriately applied with the camera control values for the three-dimensional object, the stereo ECU 20 may cause a timing error of the image processing or make an erroneous input of the image to be subjected to the image processing, unless the captured frames match between the camera ECU 10 and the stereo ECU 20.

Accordingly, the image processing apparatus for the vehicle according to the present invention operates as follows, in order to obtain images respectively suited for the processes of the three-dimensional object detection and the white line detection.

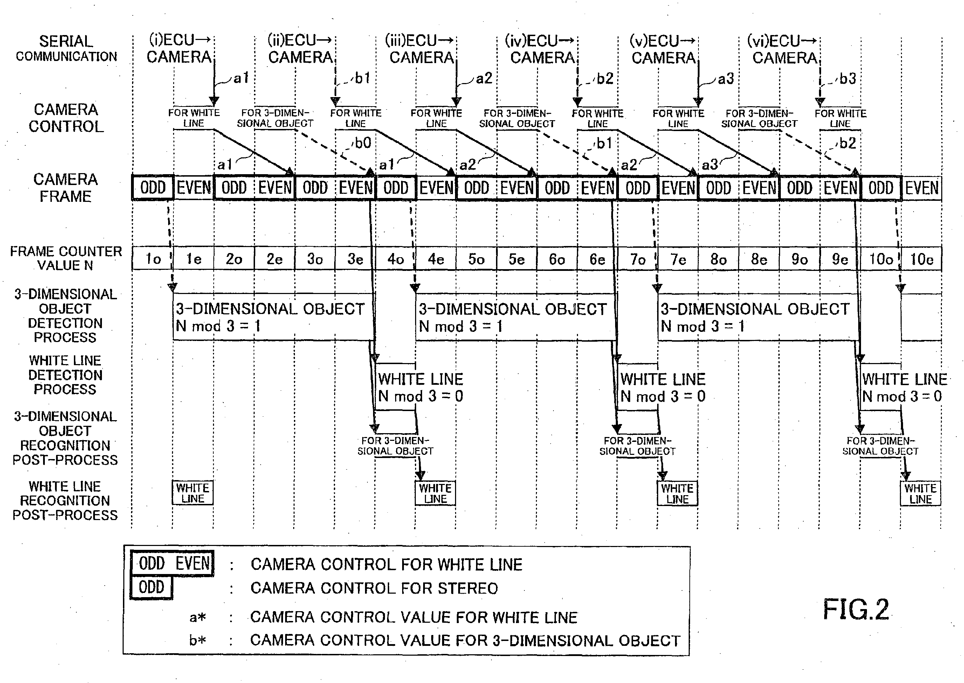

FIG. 2 is a diagram showing a portion of an image processing sequence carried out between the camera ECU 10 and the stereo ECU 20.

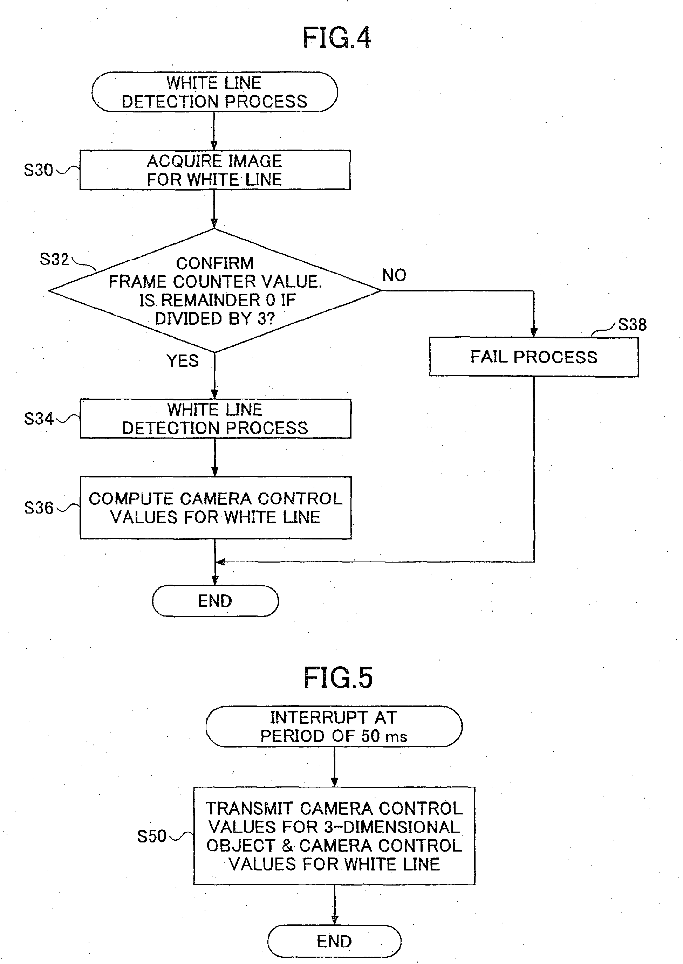

The SV-CPU 23 within the stereo ECU 20 makes a serial communication with the camera CPU 13 within the camera ECU 10. The SV-CPU 23 always transmits the camera control values for the white line (solid line arrows indicated by symbols a1, a2 and a3 in an upper portion of FIG. 2) computed by the shutter control of the image recognition process part 24 and the camera control values for the three-dimensional object (dotted line arrows indicated by symbols b1, b2 and b3 in the upper portion of FIG. 2) alternately, by the serial communication, to the camera CPU 13. For example, the camera control values for the white line and the camera control values for the three-dimensional object are transmitted in a transmission period of 50 ms (refer to FIG. 5). In addition, a transmitting sequence of the camera control values for the white line and the camera control values for the three-dimensional object is determined, so that the camera control values for the white line are transmitted when a communication counter value is an odd number (symbols (i), (iii) and (v) in FIG. 2), and the camera control values for the three-dimensional object are transmitted when the communication counter value is an even number (symbols (ii), (iv) and (vi) in FIG. 2).

When transmitting the camera control values, the SV-CPU 23 transmits the camera control values which are the most recent computed result at its transmission timing, regardless of the computation timing of the camera control values of the image recognition process part 24. In other words, if the process of computing the camera control values by the image recognition process part 24 is not carried out in time for the transmission timing for some reason such as a high load state, the previously computed camera control values are transmitted.

On the other hand, the camera ECU 10 carries out the camera control for the white line in minimum units of 2 fames, and carries out the camera control for the three-dimensional object in minimum units of 1 frame. In other words, the camera control values for the white line obtained from the SV-CPU 23 are applied for every 2 frames, and the camera control values for the three-dimensional object obtained from the SV-CPU 23 are applied for every 1 frame.

1 frame of the camera is made up of 2 fields. That is, there is an "odd field (ODD)" in which the odd numbered lines of the scanning lines are scanned, and an "even field (EVEN)" in which the even numbered lines of the scanning lines are scanned. The camera ECU 10 successively increments a frame counter value N (N = 1, 2, 3, ...) for every 1 frame that is captured. In order to enable the fields to be also distinguished from each other, the frames may be denoted by "1o, 1e", "2o, 2e", ....

Under the above conditions, the camera control by the camera ECU 10 is carried out in the following manner. FIG. 6 is a flow chart for a case where the camera ECU 10 carries out the camera control. The camera ECU 10 determines whether to carry out the camera control for the white line or the camera control for the three-dimensional object, depending on the frame counter value N (step 70). With respect to a frame that is assigned a counter value which has a remainder 2 when the frame counter value N is divided by 3, the camera control for the white line is executed by applying the camera control values for the white line (step 72). On the other hand, with respect to a frame that is assigned a counter value which has a remainder 1 when the frame counter value N is divided by 3, the camera control for the three-dimensional object is executed by applying the camera control values for the three-dimensional object (step 74).

Accordingly, in the case shown in FIG. 2, the camera ECU 10 captures the image by applying the camera control values for the white line for each of the frame counter values "3", "6" and "9", and captures the image by applying the camera control values for the three-dimensional object for each of the frame counter values "1", "4", "7" and "10".

The camera ECU 10 captures the image by applying the most recent camera control values for the three-dimensional object or the most recent camera control values for the white line that are received for every minimum unit thereof. In other words, it is not essential for the reception timing of the camera control values and the image capturing timing to be synchronized.

Therefore, the camera control value a1 for the white line is applied when the camera ECU 10 carries out the camera control with respect to the frame for which the frame counter value is 3, and the camera control value b1 for the three-dimensional object is applied when the camera ECU 10 carries out the camera control with respect to the frame for which the frame counter value is 7. On the other hand, when carrying out the camera control with respect to the frame for which the frame counter value is 5, the camera control value a2 for the white line is not yet received, and thus, the camera control value a1 for the white line, which is the most recent camera control value at this point in time, is applied. The most recent camera control value is similarly applied when the camera ECU 10 carries out the camera control with respect to the frame for which the frame counter value is 2 or 8.

Next, the camera ECU 10 which carries out the camera control described above transmits, together with the image data of the captured frame, the camera control values of the frame and the frame counter value to the stereo ECU 20. Communication definitions "1. The frame having a remainder 0 when the frame counter value N is divided by 3 (N mod 3 = 0) is a frame for the white line captured by the camera control for the white line" and "2. The frame having a remainder 1 when the frame counter value N is divided by 3 (N mod 3 = 1) is a frame for the three-dimensional object captured by the camera control for the three-dimensional object" are set in advance. The camera ECU 10 transmits the data to the stereo ECU 20 according to these communication definitions.

The stereo ECU 20 which receives the image data from the camera ECU 10 distinguishes the frame for the white line from the frame for the three-dimensional object depending on the frame counter value assigned to the frame. The stereo ECU 20 judges that the frame to be processed is the frame for the white line captured by the camera control for the white line when the corresponding frame counter value N satisfies "N mod 3 = 0" in accordance with the above communication definitions, and carries out the white line detection process. On the other hand, the stereo ECU 20 judges that the frame to be processed is the frame for the three-dimensional object captured by the camera control for the three-dimensional object when the corresponding frame counter value N satisfies "N mod 3 = 1" in accordance with the above communication definitions, and carries out the three-dimensional object detection process. A white line detection post-process such as the computation of the camera control values for the white line is carried out after the white line detection process, and a three-dimensional object detection post-process such as the computation of the camera control values for the three-dimensional object is carried out after the three-dimensional object detection process.

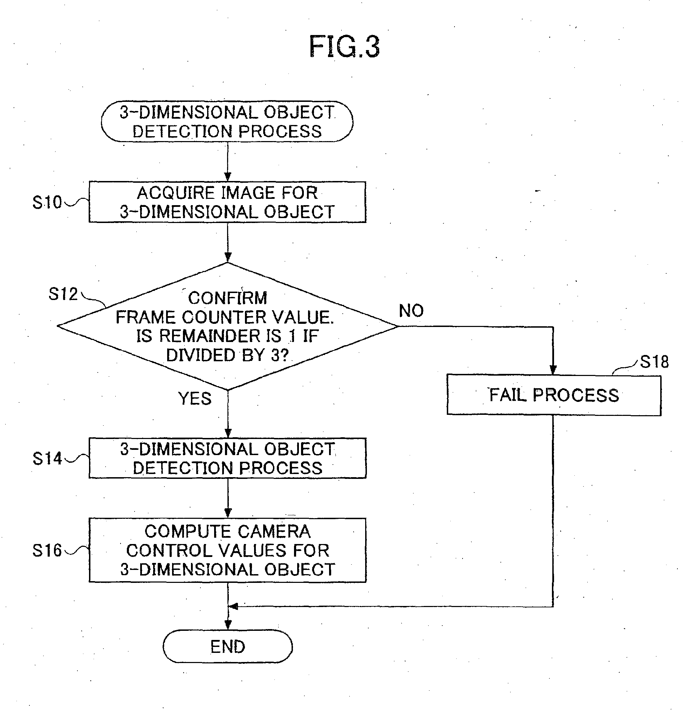

FIGS. 3 and 4 are flow charts of the processes carried out by the stereo ECU 20 which receives the image data from the camera ECU 10. In FIG. 3, the stereo ECU 20 confirms the frame counter value N of the frame to be processed according to the communication definitions described above (steps 10 and 12). If "N mod 3= 1", the image recognition process part 24 within the stereo ECU 20 carries out the three-dimensional object detection process (step 14). In addition, the image recognition process part 24 computes the camera control values for the three-dimensional object based on the frame which has been subjected to the three-dimensional object detection process (step 16). On the other hand if other than "N mod 3 = 1" in the step 12, a fail process is carried out (step 18).

Similarly, in FIG. 4, the stereo ECU 20 confirms the frame counter value N of the frame to be processed according to the communication definitions described above (steps 30 and 32). If "N mod 3= 0", the image recognition process part 24 within the stereo ECU 20 carries out the white line detection process (step 34). In addition, the image recognition process part 24 computes the camera control values for the white line based on the frame which has been subjected to the white line detection process (step 36). On the other hand if other than "N mod 3 = 0" in the step 32, a fail process is carried out (step 38).

The stereo ECU 20 switches the control according to the frame counter value, as in the steps 12 and 32. If the processing time of the white line detection process or the three-dimensional object detection process increases due to increased processing load or the like and a timing error is generated thereby, the main round of the cycle is omitted (fail process of step 18 or 38), and a restart is made by readjusting the timings.

For example, the limit of the processing time is set to 16.7 ms or less for the white line detection process, and is set to 83.3 ms or less for the three-dimensional object detection process. In addition, since the start timing of the image recognition process part 24 within the stereo ECU 20 is an EVEN start for the white line detection and an ODD start for the three-dimensional object detection, an idle run needs to be made in order to match the timings of the frame counter and the ODD or EVEN start during an initial start. For example, the image of the three-dimensional object may be received during the EVEN start or, the image of the white line may be received during the ODD start. In such cases, it is necessary to omit the process of that cycle, and to match the transmission timings of the camera control values for the white line and the camera control values for the three-dimensional object from the SV-CPU 23 to the camera ECU 10.

Therefore, the stereo ECU 20 distinguishes the frame to be subjected to the white line detection process from the frame to be subjected to the three-dimensional object detection process according to the frame counter value assigned thereto as described above, so as to prevent the frame to be subjected to the white line detection process from being erroneously input as the frame to be subjected to the three-dimensional object detection process or vice versa. The stereo ECU 20 which distinguishes the frames carries out the white line detection process and the process of computing the camera control values for the white line based on the frame that is distinguished as being the frame to be subjected to the white line detection process, and carries out the three-dimensional object detection process and the process of computing the camera control values for the three-dimensional object based on the frame that is distinguished as being the frame to be subjected to the three-dimensional object detection process.

A transmission sequence such as "transmitting the camera control values for the white line when the communication counter value is an odd number, and transmitting the camera control values for the three-dimensional object when the communication counter value is an even number" is defined with respect to the camera control values for the white line and the camera control values for the three-dimensional object that are obtained by the computations and processes described above, and the stereo ECU 20 transmits the camera control values to the camera ECU 10 according to such a definition of the transmission sequence. Accordingly, the camera ECU 10 can prevent the camera control values for the white line from being erroneously applied to the frame as the camera control values for the three-dimensional object or vice versa, by following the definition of the transmission sequence of the camera control values.

Furthermore, with respect to each of the camera control values transmitted from the stereo ECU 20 according to the transmission sequence described above, the camera ECU 10 executes the camera control for the white line by applying the camera control values for the white line with respect to the frame that is assigned the counter value which has the remainder 2 when the frame counter value N is divided by 3. On the other hand, with respect to the frame that is assigned the counter value which has the remainder 1 when the frame counter value N is divided by 3, the camera ECU 10 executes the camera control for the three-dimensional object by applying the camera control values for the three-dimensional object. The camera ECU 10 that executes each camera control transmits the image data of the captured frame to the stereo ECU 20 by adding thereto the camera control values of this frame and the corresponding frame counter value. Such a process flow is repeated between the camera ECU 10 and the stereo ECU 20, thereby making it possible to obtain the images that are suited for both the three-dimensional object detection process and the white line detection process.

Although the preferred embodiment of the present invention is described heretofore in detail, the present invention is not limited to this embodiment, and various modifications and replacements may be in this embodiment without departing from the scope of the present invention. For example, the scanning system employed in this embodiment is not limited to a particular system, and the interlacing system or the non-interlacing system may be employed.

## Claims

1. An image processing apparatus for vehicle, comprising:
a computing process means (23) for carrying out a process of computing camera control values for adjusting an exposure of a frame;
an image pickup means (17) for capturing an image by applying the camera control values computed by the computing process means (23); and
a detection process means (22, 24) for carrying out a white line detection process and a three-dimensional object detection process with respect to the frame that is captured by the image pickup means (17),
wherein
said image pickup means (17) is adapted to capture the image by applying, for every frame, the camera control values that are computed by the computing process means (23) to suit the detection of either a white line or a three-dimensional object; and
said detection process means (22, 24) is adapted to carry out the white line detection process with respect to the frame that is captured by applying the camera control values for the white line, and carry out the three-dimensional object detection process with respect to the frame that is captured by applying the camera control values for the three-dimensional object;
**characterized in that**:
said image pickup means (17) is adapted to transmit the captured frame to the detection process means (22, 24) by adding thereto a frame counter value (N) and the camera control values that were applied when capturing the frame;
said detection process means (22, 24) is adapted to distinguish the frame that is to be subjected to the white line detection process from the frame that is to be subjected to the three-dimensional object detection process, depending on the added frame counter value (N);
said computing process means (23) is adapted to compute the camera control values for the white line based on the frame that is distinguished as being the frame for the white line detection process, compute the camera control values for the three-dimensional object based on the frame that is distinguished as being the frame for the three-dimensional object detection process, and transmit the computed camera control values for the white line and the computed camera control values for the three-dimensional object to the image pickup means (17) in a predetermined transmission sequence; and
said computing process means (23) is adapted to transmit a previously computed camera control value to the image pickup means (17) if the process of computing the camera control value is not carried out in time for a predetermined transmission timing with respect to the image pickup means (17).

2. The image processing apparatus for vehicle as claimed in claim 1, wherein said image pickup means (17) is adapted to capture the image by applying most recent camera control values for the white line and most recent camera control values for the three-dimensional object that have been received.

## Patentansprüche

1. Bildverarbeitungsvorrichtung für ein Fahrzeug, die aufweist:
eine Rechenprozesseinrichtung (23) zum Durchführen eines Prozesses zum Berechnen von Kamerasteuerwerten zum Einstellen einer Belichtung eines Rahmens;
eine Bildaufnahmeeinrichtung (17) zum Aufnehmen eines Bildes durch Verwenden der Kamerasteuerwerte, die von der Rechenprozesseinrichtung (23) berechnet werden; und
eine Erfassungsprozesseinrichtung (22, 24) zum Durchführen eines Weißlinienerfassungsprozesses und eines Dreidimensional-Objekterfassungsprozesses in Bezug auf den Rahmen, der von der Bildaufnahmeeinrichtung (17) aufgenommen wird,
wobei
die Bildaufnahmeinrichtung (17) ausgelegt ist, das Bild durch Verwenden der Kamerasteuerwerte, die von der Rechenprozesseinrichtung (23) berechnet werden, für jeden Rahmen in geeigneter Weise zur Erfassung entweder einer weißen Linie oder eines dreidimensionalen Objektes aufzunehmen; und
die Erfassungsprozesseinrichtung (22, 24) ausgelegt ist, den Weißlinienerfassungsprozess in Bezug auf den Rahmen durchzuführen, der durch Verwenden der Kamerasteuerwerte für die weiße Linie aufgenommen wird, und den Dreidimensional-Objekterfassungsprozess in Bezug auf den Rahmen durchzuführen, der durch Verwenden der Kamerasteuerwerte für das dreidimensionale Objekt aufgenommen wird;
**dadurch gekennzeichnet, dass**
die Bildaufnahmeeinrichtung (17) ausgelegt ist, den aufgenommenen Rahmen durch Hinzufügen eines Rahmenzählerwertes (N) und der Kamerasteuerwerte zu diesem, die verwendet wurden, als der Rahmen aufgenommen wurde, an die Erfassungsprozesseinrichtung (22, 24) zu übertragen;
die Erfassungsprozesseinrichtung (22, 24) ausgelegt ist, den Rahmen, der dem Weißlinienerfassungsprozess zu unterziehen ist, von dem Rahmen, der dem Dreidimensional-Objekterfassungsprozess zu unterziehen ist, in Abhängigkeit von dem hinzugefügten Rahmenzählerwert (N) zu unterscheiden;
die Rechenprozesseinrichtung (23) ausgelegt ist, die Kamerasteuerwerte für die weiße Linie auf der Grundlage des Rahmens, der als der Rahmen für den Weißlinienerfassungsprozess erkannt wird, zu berechnen, die Kamerasteuerwerte für das dreidimensionale Objekt auf der Grundlage des Rahmens, der als der Rahmen für den Dreidimensional-Objekterfassungsprozess erkannt wird, zu berechnen, und die berechneten Kamerasteuerwerte für die weiße Linie und die berechneten Kamerasteuerwerte für das dreidimensionale Objekt an die Bildaufnahmeeinrichtung (17) in einer vorbestimmten Übertragungsreihenfolge zu übertragen; und
die Rechenprozesseinrichtung (23) ausgelegt ist, einen zuvor berechneten Kamerasteuerwert an die Bildaufnahmeeinrichtung (17) zu übertragen, wenn der Prozess des Berechnens des Kamerasteuerwertes für einen vorbestimmten Übertragungszeitpunkt in Bezug auf die Bildaufnahmeeinrichtung (17) nicht rechtzeitig durchgeführt wird.

2. Bildverarbeitungsvorrichtung für ein Fahrzeug nach Anspruch 1, wobei die Bildaufnahmeeinrichtung (17) ausgelegt ist, das Bild durch Verwenden von jüngsten empfangenen Kamerasteuerwerten für die weiße Linie und jüngsten empfangenen Kamerasteuerwerten für das dreidimensionale Objekt aufzunehmen.

## Revendications

1. Équipement de traitement d'image pour véhicule, comprenant :
un moyen (23) de traitement informatique destiné à effectuer un traitement consistant à calculer des valeurs de commande d'appareil de prise de vue pour ajuster l'exposition d'une vue ;
un moyen (17) de prise de vue destiné à prendre une image en appliquant les valeurs de commande d'appareil de prise de vue calculées par le moyen (23) de traitement informatique ; et
un moyen (22, 24) de traitement de détection destiné à effectuer un traitement de détection de ligne blanche et un traitement de détection d'objet tridimensionnel en ce qui concerne la vue qui est prise par le moyen (17) de prise de vue,
dans lequel ledit moyen (17) de prise de vue est apte à prendre l'image en appliquant, pour chaque vue, les valeurs de commande d'appareil de prise de vue qui sont calculées par le moyen (23) de traitement informatique pour convenir à la détection de l'un ou l'autre d'une ligne blanche ou d'un objet tridimensionnel, et
dans lequel ledit moyen (22, 24) de traitement de détection est apte à effectuer le traitement de détection de ligne blanche en ce qui concerne la vue qui est prise en appliquant les valeurs de commande d'appareil de prise de vue pour la ligne blanche, et à effectuer le traitement de détection d'objet tridimensionnel en ce qui concerne la vue qui est prise en appliquant les valeurs de commande d'appareil de prise de vue pour l'objet tridimensionnel,
**caractérisé :**
**en ce que** ledit moyen (17) de prise de vue est apte à transmettre, au moyen (22, 24) de traitement de détection, la vue prise en y ajoutant une valeur (N) de compteur de vues et les valeurs de commande d'appareil de prise de vue qui ont été appliquées lors de la prise de la vue ;
**en ce que** ledit moyen (22, 24) de traitement de détection est apte à distinguer la vue qui est à soumettre au traitement de détection de ligne blanche de la vue qui et à soumettre au traitement de détection d'objet tridimensionnel, en fonction de la valeur (N) de compteur de vues ajoutée ;
**en ce que** ledit moyen (23) de traitement informatique est apte à calculer les valeurs de commande d'appareil de prise de vue pour la ligne blanche en se basant sur la vue qui a été distinguée comme étant la vue pour le traitement de détection de ligne blanche, à calculer les valeurs de commande d'appareil de prise de vue pour l'objet tridimensionnel en se basant sur la vue qui a été distinguée comme étant la vue pour le traitement de détection d'objet tridimensionnel, et à transmettre, au moyen (17) de prise de vue, les valeurs calculées de commande d'appareil de prise de vue pour la ligne blanche et les valeurs calculées de commande d'appareil de prise de vue pour l'objet tridimensionnel dans une séquence prédéterminée de transmission ; et
**en ce que** ledit moyen (23) de traitement informatique est apte à transmettre, au moyen (17) de prise de vue, une valeur calculée antérieurement de commande d'appareil de prise de vue si le traitement de calcul de la valeur de commande d'appareil de prise de vue n'est pas effectué à temps pour un cadencement prédéterminé de transmission en ce qui concerne le moyen (17) de prise de vue.

2. Équipement de traitement d'image pour véhicule selon la revendication 1, dans lequel ledit moyen (17) de prise de vue est apte à prendre l'image en appliquant les valeurs les plus récentes de commande d'appareil de prise de vue pour la ligne blanche et les valeurs les plus récentes de commande d'appareil de prise de vue pour l'objet tridimensionnel qui ont été reçues.
